# FASCICULE DE BREVET EUROPEEN

(11) **EP 3 397 872 B1**
(45) Date de publication et mention de la délivrance du brevet: **27.11.2019**
(21) Numéro de dépôt: 16816608.0
(22) Date de dépôt: 08.12.2016
(51) Int. Cl.: F16D 55/16, F16D 55/228

(54) **ETRIER FIXE DE FREIN A DISQUE AVEC ACTIONNEUR ELECTRIQUE INTEGRE**
FESTER BREMSSATTEL EINER SCHEIBENBREMSE MIT INTEGRIERTEM ELEKTRISCHEM AKTUATOR
FIXED CALIPER OF DISC BRAKE WITH INTEGRATED ELECTRICAL ACTUATOR

(30) Priorité: 31.12.2015 FR 1563494
(43) Date de publication de la demande: 07.11.2018
(73) Titulaire: Chassis Brakes International B.V., 5656 AG Eindhoven (NL)
(72) Inventeur: PASQUET, Thierry, 94700 Vincennes (FR); TRISTANO, Nicola, 75016 Paris (FR)
(74) Mandataire: IPAZ
(86) Numéro de dépôt international: PCT/EP2016/080190
(87) Numéro de publication internationale: WO 2017/114645

(56) Documents cités:
- WO-A1-2009/016660
- FR-A1- 2 837 548
- JP-A- 2010 236 655
- JP-U- H01 168 392
- US-A1- 2015 354 651

## Description

L'invention se rapport à un étrier de frein fixe, comprenant au moins une paire de pistons de frein logés dans deux demi-boîtiers assemblés ensemble. Selon l'invention, cet étrier comprend
d'une part un mécanisme d'entraînement incluant une motorisation qui entraîne en rotation un mécanisme vis-écrou coaxial au premier piston pour le déplacer selon son axe ; et
d'autre part un mécanisme de transmission mécanique réparti entre les deux demi-boîtiers, agencé pour coopérer avec ledit mécanisme d'entraînement pour entrainer en rotation un deuxième mécanisme vis-écrou coaxial au deuxième piston pour produire déplacer ce deuxième piston un sens opposé.

Ce mécanisme de transmission comprend un arbre parallèle aux pistons, qui accouple entre eux deux pignons engrenant chacun avec la vis de l'un des pistons.

### Etat de la technique

Dans le domaine des freins de véhicule, depuis plus de cinquante ans, l'actionnement était réalisé par pistons hydraulique pour le frein de service, et par tirage de câble pour le frein de stationnement et de secours, ou frein de parc. Depuis au moins une dizaine d'années, il est courant de réaliser un freinage automatisé, c'est à dire motorisé et au moins à commande électrique, du moins pour le frein de parc. Il est recherché aussi depuis longtemps de réaliser des freins à actionnement entièrement motorisé, en général électriques.

Cependant, il reste délicat d'intégrer cette motorisation dans la base de freinage, c'est à dire la partie qui est fixée à la roue. Les contraintes pour cela sont nombreuses. On compte en particulier l'encombrement, l'environnement sévère dû par exemple à l'eau, la chaleur et les projections et poussières, et les inconvénients de tout ajout de masse puisqu'il s'agit d'une partie non suspendue.

Dans les freins à disque avec étrier coulissant, une seule des branches de l'étrier porte un piston ou plusieurs, branche en général appelée corps d'étrier. L'autre branche ne comporte pas de partie active, et sert seulement à recevoir l'effort de serrage produit par le piston logé dans le corps. Il existe différentes solutions pour monter un actionneur électrique directement sur ou dans un étrier coulissant, par exemple telles que divulguées dans les documents US 4 804 073 et US 5 348 123.

Dans les freins à disque avec étrier fixe, à une ou plusieurs paires de pistons, les deux branches de l'étrier portent chacune un piston de chaque paire, et les deux pistons d'une paire doivent être activés pour réaliser le serrage (voir par exemple le document JPH01168392U). Les solutions connues ne permettent pas actuellement de monter ou d'intégrer un actionneur électrique sur les deux pistons d'une telle paire de piston sur un étrier fixe, en général pour des raisons de poids et d'encombrement.

Un but de l'invention est de pallier tout ou partie des inconvénients de l'art antérieur, et en particulier de réaliser un actionnement à motorisation électrique montée solidaire de l'étrier ou intégrée dans celui-ci, pour un frein à disque à étrier fixe.

### Exposé de l'invention

L'invention propose un étrier de frein à disque à montage fixe, comprenant au moins une paire de pistons de frein opposés comprenant un premier piston et un deuxième piston, typiquement coaxiaux, logés dans deux demi-boîtiers assemblés ensemble, typiquement de façon symétrique. Ces pistons y sont agencés pour appliquer et serrer au moins une paire de garnitures sur des pistes de frottement situées sur les deux faces opposées d'un disque de frein.

Selon l'invention, cet étrier comprend d'une part au moins un mécanisme d'entraînement incluant un moteur ou motoréducteur agencé pour entrainer en rotation un premier mécanisme vis-écrou coaxial au premier piston de façon à produire un déplacement linéaire dudit premier piston selon son axe dans un premier sens. De préférence, ce mécanisme d'entraînement comprend une motorisation fixée sur le frein du côté du demi-train du véhicule, c'est à dire du côté opposée à la roue.

En outre, cet étrier comprend d'autre part au moins un mécanisme de transmission mécanique réparti entre les deux demi-boîtiers et agencé pour coopérer avec ledit mécanisme d'entraînement de façon à entrainer en rotation un deuxième mécanisme vis-écrou coaxial au deuxième piston de façon à produire un déplacement linéaire dudit deuxième piston selon son axe dans un deuxième sens opposé au premier sens.

De préférence, ce mécanisme de transmission est agencé pour accoupler entre eux, de façon permanente, les mécanismes vis-écrou du premier et du deuxième piston.

On obtient ainsi un actionnement motorisé, intégré à la base de freinage, qui peut activer les deux pistons d'une même paire avec une seule motorisation voire une seule entrée d'entraînement mécanique dans l'étrier, ce qui limite le poids et l'encombrement induit par cette motorisation.

Le fait de fabriquer l'étrier en deux parties (non semblables) est habituellement considéré comme un inconvénient, puisque cela représente plus d'opérations de fabrication et d'assemblage, et donc de coût.

Cependant, l'invention permet d'utiliser cet inconvénient pour y implanter plus facilement un actionnement motorisé.

La source de puissance, par exemple en couple, est fournie par exemple par un moteur à courant continu.

L'invention permet ainsi d'adapter un frein de parc sur un frein à étrier fixe, sans avoir à installer d'appareils extérieurs et les liaisons correspondantes, en montant l'ensemble directement sur ou dans l'étrier.

Selon d'autres particularités de l'invention, avantageusement combinées ensemble mais non obligatoirement :
- Le mécanisme vis-écrou d'au moins un piston, et de préférence tous ceux ainsi actionnés, est disposé à l'intérieur d'un logement ménagé dans ledit piston du côté opposé au disque, en qu'il applique son effort au fond dudit logement, et est entraîné par un organe d'entrée ou un pignon d'entrée qui est disposé à l'extérieur dudit logement.
   rev4 + appui rotule
- Le fond du logement du piston présente une forme hémisphérique qui reçoit l'appui du mécanisme vis-écrou par une face de forme complémentaire ; ce qui permet par exemple de faciliter et respecter l'alignement des pistons de la même paire.
- le mécanisme de transmission comprend un premier pignon de transmission qui engrène avec un premier pignon de piston solidaire du mécanisme vis-écrou du premier piston, et qui est solidaire en rotation avec un deuxième pignon de piston solidaire du mécanisme vis-écrou du deuxième piston, par l'intermédiaire d'un arbre de transmission mono-axe s'étendant au travers des deux demi-boîtiers. Cet arbre de transmission est par exemple réalisé en deux demi-arbres accouplés 33 entre eux, par exemple par coopération complémentaire de forme d'entraînement en rotation, qui sont libres en translation l'une par rapport à l'autre.

Différents modes de réalisation sont possibles, en particulier avec des modes d'entrée de l'entraînement rotatif depuis la motorisation.

Selon un premier exemple de mode de réalisation, le mécanisme d'entraînement comprend une vis sans fin qui entraine le premier mécanisme vis-écrou par coopération à axes non parallèles avec un pignon de piston.

Selon un deuxième exemple de mode de réalisation, le mécanisme d'entraînement comprend une vis sans fin qui entraine le premier mécanisme vis-écrou par coopération à axes non parallèles avec un manchon à denture externe qui entoure le piston et est solidaire en rotation de son mécanisme vis-écrou par un élément d'accouplement disposé à l'extrémité dudit piston du côté opposé au disque.

Selon un troisième exemple de mode de réalisation, le mécanisme d'entraînement comprend un pignon qui entraine le premier mécanisme vis-écrou par coopération à axes parallèles avec un pignon de piston.

Selon un quatrième exemple de mode de réalisation, pouvant être combiné avec les autres, l'invention s'applique à un étrier (2') qui comprend au moins deux paires de piston de pistons de frein d'axes parallèles, lesquels pistons sont alors accouplés par un même mécanisme de transmission.

Selon un autre aspect, il est aussi proposé un véhicule ou sous-ensemble de véhicule comprenant au moins un étrier tel qu'exposé ici.

Des modes de réalisation variés de l'invention sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de mise en œuvre nullement limitatif, et des dessins annexés sur lesquels :
- la FIGURE 1 est une vue schématique en coupe sagittale par l'axe du disque et l'axe des pistons qui illustre un premier exemple de mode de réalisation de l'invention, avec entraînement par vis sans fin sur un pignon en bout de piston ;
- la FIGURE 2 est une vue schématique en perspective semi-transparente qui illustre le motoréducteur d'entraînement du mode de réalisation de la FIGURE 1 ;
- la FIGURE 3 est un schéma en perspective partielle qui illustre l'agencement de la transmission et des deux pistons, selon plusieurs variantes d'entraînement, avec
   ∘ en FIGURE 3a, un entraînement par vis sans fin,
   ∘ en FIGURE 3b, un entraînement par pignon à axe parallèle,
   ∘ en FIGURE 3c, un détail du montage palier-joint des demi-arbres de transmission,
   ∘ en FIGURE 3d, un détail de l'accouplement des demi-arbres de transmission, et
   ∘ en FIGURE 3e, le bouchon d'obturation du logement de transmission ;

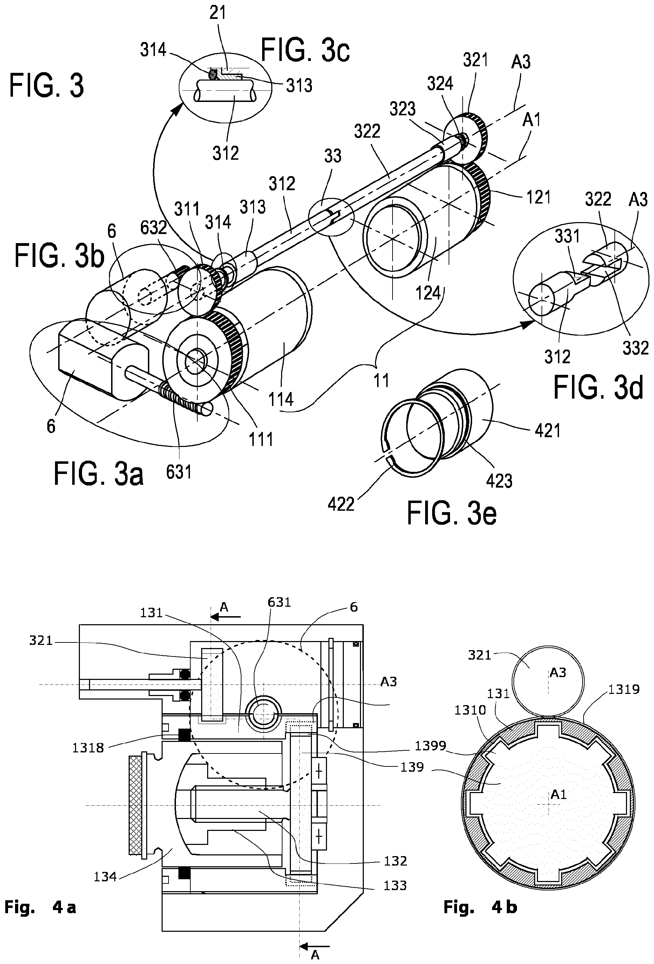

- les FIGURE 4a et FIGURE 4b illustrent un deuxième exemple de mode de réalisation, avec entraînement par vis sans fin sur un manchon denté d'entraînement qui entoure le piston, respectivement en vue partielle schématique en coupe sagittale et en vue partielle en coupe transversale décalée selon AA ;

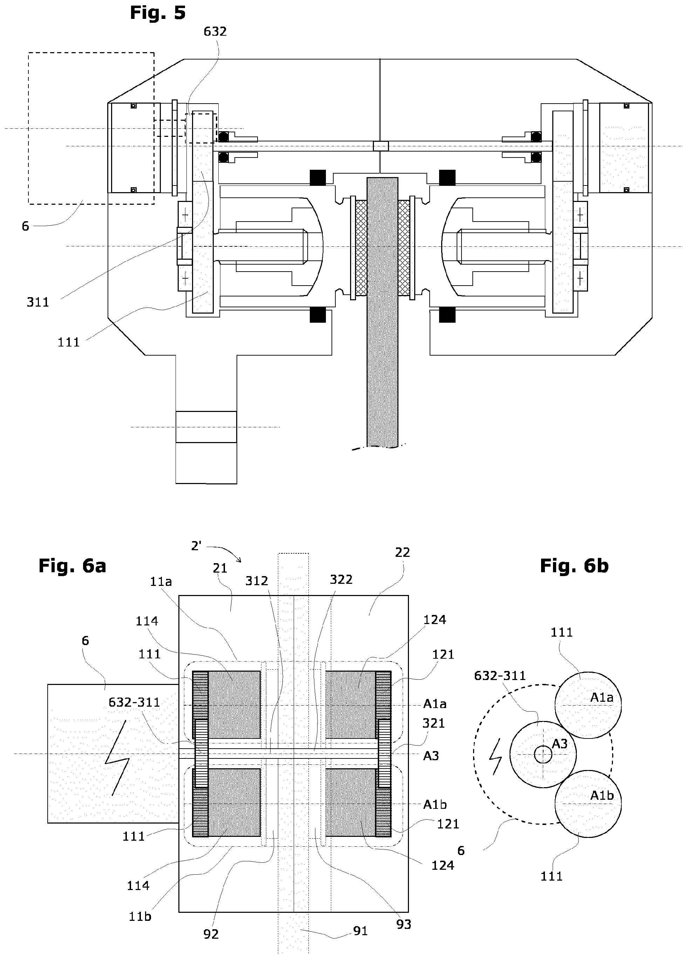

- la FIGURE 5 est une vue schématique en coupe sagittale qui illustre un troisième mode de réalisation avec entraînement par pignon à axe parallèle à l'axe de piston ;
- les FIGURE 6a et FIGURE 6b sont des schémas partiels qui illustrent un quatrième exemple de mode de réalisation, avec un entraînement direct par un pignon de transmission, ici appliqué à un étrier fixe à deux paires de pistons de frein, respectivement en vue de dessus selon un plan parallèle aux axes des pistons et en vue arrière selon les axes des pistons.

### Description d'un exemple de mode de réalisation

### Mode de réalisation 1

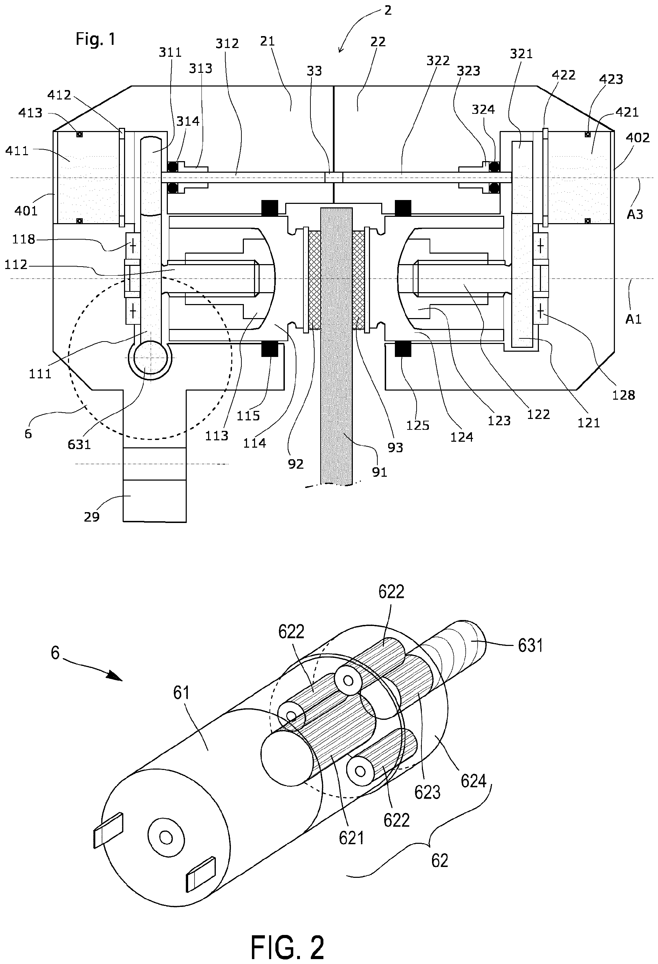

Les FIGURE 1, FIGURE 2 et FIGURE 3 illustrent un premier exemple de mode de réalisation de l'invention. Les autres exemples de modes de réalisation ne seront décrits que dans leurs différences.

Dans ce premier mode de réalisation, un motoréducteur 6 comporte un arbre d'entraînement 631 portant une vis sans fin qui engrène sur un pignon 111, situé au bout du piston côté châssis. Ce pignon de piston 111 entraîne en rotation une vis 112, laquelle déplace un écrou 113 selon l'axe A1 de déplacement du piston. Cet écrou 113 présente une tête hémisphérique qui appuie sur une surface de forme complémentaire au fond du logement ménagé à l'intérieur du piston 114.

Comme on le voit en FIGURE 1, l'étrier 2 est réalisé en deux parties, dont l'une peut être fixée au châssis du véhicule par une patte de fixation 29 munie d'un alésage accueillant un boulon de fixation.

Au dessus de l'axe A1 des pistons et de leurs logements, ces deux demi-boîtiers 21, 22 comprennent un alésage de transmission traversant, parallèle à l'axe du disque 91 et à celui A1 des pistons. Cet alésage de transmission accueille l'arbre de transmission ici formé par deux demi-arbres 312, 322 qui sont accouplés ensemble en rotation, au niveau du plan de séparation entre les deux parties 21, 22 de l'étrier, par un accouplement démontable 33. Comme illustré en FIGURE 3d, cet accouplement 33 peut prendre la forme de deux formes d'entraînement non circulaires complémentaires entre elles, portées par l'extrémité de chaque demi-arbre. Ici, il s'agit d'un plat de manœuvre 331 à l'extrémité d'un demi-arbre 312, qui s'insère dans une fente 332 de l'autre demi arbre 322.

Comme on le voit en FIGURE 1, l'alésage de transmission présente une extrémité, du côté opposé au disque 91, qui forme un logement débouchant 401, 402, de diamètre plus large que le pignon de transmission. Chacun de ces logements 311, 321 est agencé pour pouvoir y introduire et loger le pignon de transmission correspondant, respectivement 311 et 421.

Comme illustré en FIGURE 1 et FIGURE 3e, chacun de ces logements est obturé par un bouchon 411, 421 muni d'un joint d'étanchéité 413, 423, qui est enfoncé dans son logement jusqu'à un segment d'arrêt 412, 422.

Comme illustré en FIGURE 2. le mécanisme d'entraînement comprend un motoréducteur 6 incluant un moteur 61 entraînant un réducteur épicycloïdal 62 à au moins un train épicycloïdal entraîné en entrée par un pignon planétaire 621 engrenant avec un groupe de satellites 622 portés par un porte-satellites 623 et engrenant avec une couronne 624 fixe solidaire du boîtier de motoréducteur, et fournissant un entraînement en sortie par ledit porte-satellites 633. Optionnellement, le motoréducteur peut comprendre plusieurs trains épicycloïdaux par exemple en série ou harmoniques à couronne intermédiaire mobile, ou d'autres types de réducteurs.

Dans ce premier mode de réalisation, comme illustré en FIGURE 3a, le motoréducteur 6 porte en sortie une vis sans fin 631 qui entraine le premier mécanisme vis-écrou par coopération à axes non parallèles avec un pignon de piston 111, ici selon un angle de 90°.

### Mode de réalisation 2

Dans un deuxième exemple de mode de réalisation, comme illustré en FIGURE 4A et en FIGURE 4B, le mécanisme d'entraînement comprend une vis sans fin 631 qui entraine le premier mécanisme vis-écrou par coopération à axes non parallèles avec un manchon de piston 131 à denture externe 1319 qui entoure le piston 134. Ce manchon est libre en rotation dans le logement du piston, et est solidaire en rotation 1310-1399 du mécanisme vis-écrou 132, 133, par un élément d'accouplement 139 disposé à l'extrémité dudit piston du côté opposé au disque 99. Dans cet exemple, cette liaison en rotation est réalisée par une flasque d'entraînement de piston 139, solidaire de la vis 132, et qui porte sur sa périphérie des excroissances 1399 ou tétons. Celles-ci sont logées dans des creux 1310 formés dans la surface intérieure du manchon d'entraînement 131.

### Mode de réalisation 3

Dans un troisième exemple de mode de réalisation, comme illustré en FIGURE 3b et en FIGURE 5, le mécanisme d'entraînement comprend un pignon 632 qui entraine le premier mécanisme vis-écrou par coopération à axes parallèles avec un pignon de piston 111.

### Mode de réalisation 4

Dans un quatrième mode de réalisation, comme illustré en FIGURE 6a et FIGURE 6b, l'invention est appliquée à un étrier fixe à deux paires de pistons de frein. L'entraînement est ici présenté avec un arbre de motoréducteur qui entraine directement l'un 311 des pignons de transmission.

On notera que cet entraînement peut s'appliquer aussi aux autres modes de réalisation, et que ce mode peut aussi utiliser les modes d'entraînement des autres modes de réalisation.

Comme on le voit, un même arbre de transmission 312, 322 porte deux pignons de transmission 311, 321 qui engrènent chacun avec les pignons de piston 111, 121 de deux paires de pistons 11a et 11b.

Bien sûr, l'invention n'est pas limitée aux exemples qui viennent d'être décrits et de nombreux aménagements peuvent être apportés à ces exemples sans sortir du cadre de l'invention, définie par les revendications.

## Revendications

1. Etrier (2, 2') de frein à disque à montage fixe, comprenant au moins une paire (11) de pistons de frein (114, 124) opposés comprenant un premier piston et un deuxième piston, logés dans deux demi-boîtiers (21, 22) assemblés ensemble, lesquels pistons sont agencés pour appliquer et serrer au moins une paire de garnitures (92, 93) sur des pistes de frottement d'un disque de frein (91), **caractérisé en ce qu'**il comprend
au moins un mécanisme d'entraînement incluant un moteur ou motoréducteur (6) agencé pour entrainer en rotation un premier mécanisme vis-écrou coaxial au premier piston de façon à produire un déplacement linéaire dudit premier piston selon son axe dans un premier sens, et
au moins un mécanisme de transmission mécanique réparti entre les deux demi-boîtiers (21, 22) et agencé pour coopérer avec ledit mécanisme d'entraînement de façon à entrainer en rotation un deuxième mécanisme vis-écrou coaxial au deuxième piston de façon à produire un déplacement linéaire dudit deuxième piston selon son axe dans un deuxième sens opposé au premier sens.

2. Etrier selon la revendication précédente, **caractérisé en ce que** le mécanisme de transmission est agencé pour accoupler entre eux, de façon permanente, les mécanismes vis-écrou (112-113, 122-123) du premier (114) et du deuxième (124) piston.

3. Etrier selon l'une quelconque des revendications précédentes, **caractérisé en ce que** le mécanisme vis-écrou (112-113, 122-123, 132, 133) d'au moins un piston (114, 124, 134) est disposé à l'intérieur d'un logement ménagé dans ledit piston du côté opposé au disque (91), en qu'il applique son effort au fond dudit logement, et est entraîné par un organe d'entrée (139) ou un pignon d'entrée (111, 121) qui est disposé à l'extérieur dudit logement.

4. Etrier selon la revendication précédente, **caractérisé en ce que** le fond du logement du piston (114, 124, 134) présente une forme hémisphérique qui reçoit l'appui du mécanisme vis-écrou par une face de forme complémentaire.

5. Etrier selon l'une quelconque des revendications précédentes, **caractérisé en ce que** le mécanisme de transmission comprend un premier pignon de transmission (311) qui engrène avec un premier pignon de piston (111) solidaire du mécanisme vis-écrou (112-113) du premier piston (114), et qui est solidaire en rotation avec un deuxième pignon de piston (121) solidaire du mécanisme vis-écrou (122-123) du deuxième piston (124), par l'intermédiaire d'un arbre de transmission (312, 322) mono-axe s'étendant au travers des deux demi-boîtiers (21, 22).

6. Etrier selon la revendication précédente, **caractérisé en ce que** le ou les demi-boîtiers (21, 22) comprennent un alésage traversant parallèle à l'axe du disque et accueillant l'arbre de transmission (312, 322), et dont l'extrémité opposée au disque forme un logement débouchant (401, 402) agencé pour pouvoir y introduire et loger le pignon de transmission (311, 321), lequel logement est obturé par un bouchon (411, 421) d'étanchéité (413, 423).

7. Etrier selon l'une quelconque des revendications précédentes, **caractérisé en ce que** le mécanisme d'entraînement comprend un motoréducteur (6) incluant un moteur (61) entraînant un réducteur épicycloïdal (62) à au moins un train épicycloïdal entraîné en entrée par un pignon planétaire (621) engrenant avec un groupe de satellites (622) portés par un porte-satellites (623) et engrenant avec une couronne (624) fixe solidaire du boîtier de motoréducteur, et fournissant un entraînement en sortie par ledit porte-satellites (633).

8. Etrier selon l'une quelconque des revendications précédentes, **caractérisé en ce que** le mécanisme d'entraînement comprend une vis sans fin (631) qui entraine le premier mécanisme vis-écrou par coopération à axes non parallèles avec un pignon de piston (111).

9. Etrier selon l'une quelconque des revendications précédentes, **caractérisé en ce que** le mécanisme d'entraînement comprend une vis sans fin (631) qui entraine le premier mécanisme vis-écrou par coopération à axes non parallèles avec un manchon (131) à denture externe (1319) qui entoure le piston (134) et est solidaire en rotation (1310-1399) de son mécanisme vis-écrou (132, 133) par un élément d'accouplement (139) disposé à l'extrémité dudit piston du côté opposé au disque (99).

10. Etrier selon une des revendications 1 à 7, **caractérisé en ce que** le mécanisme d'entraînement comprend un pignon (632) qui entraine le premier mécanisme vis-écrou par coopération à axes parallèles avec un pignon de piston (111).

11. Etrier (2') selon l'une quelconque des revendications précédentes, **caractérisé en ce qu'**il comprend au moins deux paires de piston (11a, 11b) de pistons de frein (114, 124) d'axes parallèles (A1a, A1b), qui sont accouplés par un même mécanisme de transmission (111, 311, 312, 33, 322, 321, 121).

12. Véhicule ou sous-ensemble de véhicule comprenant au moins un étrier selon l'une quelconque des revendications précédentes.

## Patentansprüche

1. Fester Bremssattel (2, 2') einer Scheibenbremse mit mindestens einem Paar (11) gegenüber liegender Bremskolben (114, 124), umfassend einen ersten Kolben und einen zweiten Kolben, welche in zwei zusammengefügten Halbgehäusen (21, 22) aufgenommen sind, wobei die Kolben zum Beaufschlagen und Klemmen von mindestens einem Paar Reibbelägen (92, 93) auf Reibbahnen einer Bremsscheibe (91) eingerichtet sind, **dadurch gekennzeichnet, dass** er umfasst:
mindestens einen Antriebsmechanismus, welcher einen Motor oder Getriebemotor (6) enthält, der zum drehbeweglichen Antrieb eines ersten, mit dem ersten Kolben koaxial gelagerten Schrauben-Mutter-Mechanismus derart eingerichtet ist, um eine lineare Verschiebung des ersten Kolbens längs dessen Achse in einer ersten Richtung herbeizuführen, und
mindestens einen mechanischen Übertragungsmechanismus, der zwischen den beiden Halbgehäusen (21, 22) verteilt und zur Zusammenwirkung mit diesem Antriebsmechanismus derart eingerichtet ist, um einen zweiten, mit dem zweiten Kolben koaxial gelagerten Schrauben-Mutter-Mechanismus derart drehbeweglich anzutreiben, um eine lineare Verschiebung dieses zweiten Kolbens längs dessen Achse in einer zweiten Richtung entgegen der ersten Richtung herbeizuführen.

2. Bremssattel nach dem vorhergehenden Anspruch, **dadurch gekennzeichnet, dass** der Übertragungsmechanismus zur dauerhaften Kupplung der Schrauben-Mutter-Mechanismen (112-113, 122-123) des ersten (114) und des zweiten (124) Kolbens miteinander eingerichtet ist.

3. Bremssattel nach einem der vorhergehenden Ansprüche, **dadurch gekennzeichnet, dass** der Schrauben-Mutter-Mechanismus (112-113, 122-123, 132, 133) mindestens eines Kolbens (114, 124, 134) innerhalb einer Aufnahme gelagert ist, welche in dem Kolben an der der Scheibe (91) gegenüber liegenden Seite gebildet ist, dass er seine Kraft am Grund dieser Aufnahme ausübt und durch ein Eingangsteil (139) oder ein Eingangsritzel (111, 121) angetrieben wird, welches außerhalb dieser Aufnahme gelagert ist.

4. Bremssattel nach dem vorhergehenden Anspruch, **dadurch gekennzeichnet, dass** der Grund der Aufnahme des Kolbens (114, 124, 134) eine hemisphärische Form aufweist, auf welche der Schrauben-Mutter-Mechanismus über eine komplementär geformte Seite zum Anliegen kommt.

5. Bremssattel nach einem der vorhergehenden Ansprüche, **dadurch gekennzeichnet, dass** der Übertragungsmechanismus ein erstes Übertragungsritzel (311) umfasst, das mit einem ersten, mit dem Schrauben-Mutter-Mechanismus (112-113) des ersten Kolbens (114) starr gekuppelten Kolbenritzel (111) in Eingriff kommt, und das mit einem zweiten, mit dem Schrauben-Mutter-Mechanismus (122-123) des zweiten Kolbens (124) starr gekuppelten Kolbenritzel (121) über eine einachsige, sich durch die zwei Halbgehäuse (21, 22) hindurch erstreckende Transmissionswelle (312, 322) drehfest verbunden ist.

6. Bremssattel nach dem vorhergehenden Anspruch, **dadurch gekennzeichnet, dass** das oder die Halbgehäuse (21, 22) eine zu der Achse der Scheibe parallel verlaufende und die Transmissionswelle (312, 322) aufnehmende Durchbohrung umfassen, deren der Scheibe gegenüber liegende Ende eine zur Einführung darin und Aufnahme des Übertragungskolbens (311, 321) angeordnete, mündende Aufnahme (401, 402) bildet, wobei die Aufnahme durch einen dichtenden (413, 423) Stopfen (411, 421) verschlossen ist.

7. Bremssattel nach einem der vorhergehenden Ansprüche, **dadurch gekennzeichnet, dass** der Antriebsmechanismus einen Getriebemotor (6) mitsamt einen Motor (61) umfasst, welcher ein epizyklisches Untersetzungsgetriebe (62) mit mindestens einem Planetengetriebe antreibt, das eingangs durch ein Sonnenrad (621) angetrieben ist, das mit einer Gruppe von durch einen Planetenträger (623) getragenen Planetenrädern (622) in Eingriff kommt und mit einem stationären, mit dem Getriebemotorgehäuse starr gekuppelten Hohlrad (624) in Eingriff kommt, und welcher durch den Planetenträger (633) einen Antrieb am Ausgang zur Verfügung stellt.

8. Bremssattel nach einem der vorhergehenden Ansprüche, **dadurch gekennzeichnet, dass** der Antriebsmechanismus eine Schnecke (631) umfasst, welche den ersten Schrauben-Mutter-Mechanismus durch Zusammenwirkung in nicht parallel verlaufenden Achsen mit einem Kolbenritzel (111) antreibt.

9. Bremssattel nach einem der vorhergehenden Ansprüche, **dadurch gekennzeichnet, dass** der Antriebsmechanismus eine Schnecke (631) aufweist, welche den ersten Schrauben-Mutter-Mechanismus durch Zusammenwirkung in nicht parallel verlaufen Achsen mit einer außen verzahnten (1319) Hülse (131) antreibt, welche den Kolben (134) umschließt und mit dessen Schrauben-Mutter-Mechanismus (132, 133) über ein am Ende des Kolbens an der zu der Scheibe (99) gegenüber liegenden Seite gelagertes Kupplungselement (139) drehfest verbunden (1310-1399) ist.

10. Bremssattel nach einem der Ansprüche 1 bis 7, **dadurch gekennzeichnet, dass** der Antriebsmechanismus ein Ritzel (632) umfasst, welches den ersten Schrauben-Mutter-Mechanismus durch Zusammenwirkung in nicht parallel verlaufenden Achsen mit einem Kolbenritzel (111) antreibt.

11. Bremssattel (2') nach einem der vorhergehenden Ansprüche, **dadurch gekennzeichnet, dass** er mindestens zwei Kolbenpaare (11a, 11b) von Bremskolben (114, 124) mit parallel verlaufenden Achsen (A1a, A1b) umfasst, welche mittels eines gleichen Übertragungsmechanismus (111, 311, 312, 33, 322, 321, 121) gekoppelt sind.

12. Fahrzeug oder Bauuntergruppe für Fahrzeug, mindestens einen Bremssattel nach einem der vorhergehenden Ansprüche umfassend.

## Claims

1. Fixedly mounted disc brake caliper (2, 2'), comprising at least one pair (11) of opposed brake pistons (114, 124) comprising a first piston and a second piston, mounted in two half-housings (21, 22) assembled together, which pistons are arranged to apply and clamp at least one pair of linings (92, 93) on braking surfaces of a brake disc (91), **characterized in that** it comprises
at least one drive mechanism including a motor or geared motor (6) arranged to drive in rotation a first screw-nut mechanism coaxial with the first piston, so as to produce a linear displacement of said first piston along its axis in a first direction, and
at least one mechanical transmission mechanism distributed between the two half-housings (21, 22) and arranged to cooperate with said drive mechanism so as to drive in rotation a second screw-nut mechanism coaxial with the second piston so as to produce a linear displacement of said second piston along its axis in a second direction opposite to the first direction.

2. Caliper according to the preceding claim, **characterized in that** the transmission mechanism is arranged to permanently couple together the screw-nut mechanisms (112-113, 122-123) of the first (114) and of the second (124) piston.

3. Caliper according to any one of the preceding claims, **characterized in that** the screw-nut mechanism (112-113, 122-123, 132, 133) of at least one piston (114, 124, 134) is arranged inside a recess formed in said piston on the side opposite the disc (91), **in that** it applies its force at the bottom of said recess, and is driven by an input element (139) or an input pinion (111, 121) which is arranged outside said recess.

4. Caliper according to the preceding claim, **characterized in that** the bottom of the recess of the piston (114, 124, 134) has a hemispherical shape which receives the support of the screw-nut mechanism by means of a face with a complementary shape.

5. Caliper according to any one of the preceding claims, **characterized in that** the transmission mechanism comprises a first transmission pinion (311) which meshes with a first piston pinion (111) connected to the screw-nut mechanism (112-113) of the first piston (114), and which is connected in a rotationally fixed manner to a second piston pinion (121) fixedly connected to the screw-nut mechanism (122-123) of the second piston (124), via a mono-axial transmission shaft (312, 322) extending through the two half-housings (21, 22).

6. Caliper according to the preceding claim, **characterized in that** the half-housing(s) (21, 22) comprise a through bore parallel to the axis of the disc and receiving the transmission shaft (312, 322), and the end of which opposite the disc forms an opening-out recess (401, 402) arranged to be able to introduce and accommodate therein the transmission pinion (311, 321), which recess is closed by a plug (411, 421) with a seal (413, 423).

7. Caliper according to any one of the preceding claims, **characterized in that** the drive mechanism comprises a geared motor (6) including a motor (61) driving an epicyclic gear reduction unit (62) with at least one epicyclic gear train driven at the input by a sun gear (621) meshing with a group of planet gears (622) carried by a planet carrier (623) and meshing with a ring gear (624) fixedly connected to the geared motor housing, and providing a drive at the output by means of said planet carrier (633).

8. Caliper according to any one of the preceding claims, **characterized in that** the drive mechanism comprises a worm (631) which drives the first screw-nut mechanism by cooperation, with non-parallel axes, with a piston pinion (111).

9. Caliper according to any one of preceding claims, **characterized in that** the drive mechanism comprises a worm (631) which drives the first screw-nut mechanism by cooperation, with non-parallel axes, with an externally toothed (1319) sleeve (131) which surrounds the piston (134) and is rotationally fixed (1310-1399) to its screw-nut mechanism (132, 133) by a coupling element (139) arranged at the end of said piston on the side opposite the disc (99).

10. Caliper according to one of claims 1 a 7, **characterized in that** the drive mechanism comprises a pinion (632) which drives the first screw-nut mechanism by cooperation, with parallel axes, with a piston pinion (111).

11. Caliper (2') according to any one of the preceding claims, **characterized in that** it comprises at least two pairs of pistons (11a, 11b) of brake pistons (114, 124) with parallel axes (A1a, A1b), which are coupled by the same transmission mechanism (111, 311, 312, 33, 322, 321, 121).

12. Vehicle or vehicle subassembly comprising at least one caliper according to any one of the preceding claims.
